(19)

Europäisches
Patentamt

European
Patent Office

Office européen
des brevets

(11)     **EP 2 592 433 B1**

(12)                    **EUROPEAN PATENT SPECIFICATION**

(45) Date of publication and mention
     of the grant of the patent:
     **27.01.2016 Bulletin 2016/04**

(51) Int Cl.:
     **G01S 11/06** $^{(2006.01)}$

(21) Application number: **11360050.6**

(22) Date of filing: **10.11.2011**

(54) **Distance estimation**

Abstandseinschätzung

Évaluation de la distance

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**

(43) Date of publication of application:
     **15.05.2013 Bulletin 2013/20**

(73) Proprietor: **ALCATEL LUCENT**
     **92100 Boulogne-Billancourt (FR)**

(72) Inventors:
     • **Claussen, Holger**
       **Straffan**
       **Co Kildare (IE)**
     • **Kennedy, Irwin**
       **Londonderry, BT47 6HY (GB)**
     • **Bulja, Senad**
       **Dublin 15 (IE)**

(74) Representative: **Berthier, Karine**
     **Alcatel-Lucent International**
     **148/152, route de la Reine**
     **92100 Boulogne-Billancourt (FR)**

(56) References cited:
     **US-A- 5 578 933        US-A1- 2009 047 973
     US-B1- 6 990 428**

     • **KUNTHONG J ET AL: "A novel hybrid
       propagation model", ANTENNAS AND
       PROPAGATION SOCIETY INTERNATIONAL
       SYMPOSIUM, 2008. AP-S 2008. IEEE, IEEE,
       PISCATAWAY, NJ, USA, 5 July 2008 (2008-07-05),
       pages 1-4, XP031824307, ISBN:
       978-1-4244-2041-4**

**Description**

FIELD OF THE INVENTION

The present invention relates to a method, a network access node and a computer program product.

BACKGROUND

In a wireless telecommunications network, it is desirable to be able to identify the location of, for example, user equipment in order to enable operators to provide location and presence-based services to users. The effectiveness of these services increases with the accuracy with which it is possible to determine the location of the user equipment.

US 2009/047973 A1 discloses a method of obtaining a local path loss versus range model in a radio communications network. At least one path loss measurement and associated range measurement is obtained and applied to a path loss versus range model. The local model may also be used to obtain a more accurate location of a mobile radio terminal.

US 6,990,428 B1 discloses a method for determining the location of a wireless station.

Although techniques exist which attempt to accurately locate network nodes within the wireless telecommunications network, they each have shortcomings. Accordingly, it is desired to provide an improved technique for determining the location of network nodes within the wireless telecommunications network.

SUMMARY

According to a first aspect, there is provided a method as claimed in claim 1.

The first aspect recognises that a problem with existing techniques for estimating a network node location is that they all have limitations, particularly in indoor environments. For example, the satellite signals in a GPS system are usually insufficient to provide a location estimate in an indoor environment. Cell identification methods are possible, but their accuracy is limited by the cell size and many cells may need to be deployed to provide highly accurate location information which is expensive and leads to a high increase in mobility signalling. Cellular triangulation techniques exploiting timing differences of received signals from multiple base stations have accuracy limited to several tens of metres and small cells indoors cannot be used due to insufficient timing differences resulting from the short distances. Power-based finger printing using power measurements from multiple base stations cannot be used for accurate location estimation without a database of power measurements existing for all locations in the building which enables measurements made by the network node to be matched to the most likely location; although this can lead to accurate location estimation, the creation of such a database is a time-consuming and expensive process which needs to be performed whenever the environment changes.

The first aspect also recognises that it is difficult to estimate the distance to a network node based on transmissions received because those transmissions will be subjected to losses caused by obstructions (such as walls or other physical objects) and interference between the network nodes. However, the first aspect recognises that the losses caused by those obstructions or interference are typically frequency-dependent. In other words, the path losses caused by obstructions or other interference are typically frequency-dependent, whereas the path loss in free space is frequency-independent. That is to say, the path loss experienced in free space at different frequencies will typically be the same, whereas the path loss through obstructions at different frequencies will vary. By measuring the total path losses between network nodes on different frequencies and using frequency-dependent path losses determined for those frequencies, it is possible to estimate the distance between network nodes. This effectively removes the effects of the frequency-dependent path losses for the different frequencies in order to estimate the distance between network nodes. In other words, by measuring the total path loss at different frequencies and using the frequency-dependent path losses which are determined at those frequencies, it is possible to effectively cancel the frequency-dependent path losses and estimate the distance between network nodes. Given that network nodes are typically already configured to enable transmissions to occur on different frequencies, no additional hardware is required and the existing infrastructure can be utilised to provide accurate location estimation using this approach.

Accordingly, a method of estimating a distance between network nodes may be provided. The method may comprise measuring the total path losses between network nodes on at least two different frequencies. The frequency-dependent path losses of transmissions made by a network node on the different frequencies may then be determined. A distance may then be estimated between the network nodes using the total path losses and the frequency-dependent path losses on the different frequencies.

Measurement reports may be sent back to the originating network node to enable the path loss between the network nodes to be established on the different frequencies.

In one embodiment, the frequency-dependent path losses are determined from a difference in the total path losses on each different frequency between the at least one network access node and the network node. Accordingly, the frequency-dependent path losses may be calculated from the difference between the path losses on the different frequencies.

In one embodiment, the frequency-dependent path losses are determined from transmissions on each different frequency between at least two network access nodes. For example, the frequency-dependent path losses may be determined based on pilot signals transmitted between network nodes.

In one embodiment, the frequency-dependent path losses are determined from transmissions on each different frequency between at least three network access nodes. By determining the frequency-dependent path losses between at least three network nodes, the frequency-dependent path losses within a region bounded by the at least three network nodes may be determined.

In one embodiment, the frequency-dependent path losses are determined from transmissions on each different frequency and a distance between network access nodes. Accordingly, the frequency-dependent path losses may be determined using the transmissions and the distance between network nodes. It will be appreciated that the location of or distance between many static network nodes may be readily determined. Likewise, it may be possible to perform such measurements based on requiring a mobile network node to operate at a pre-defined location to determine the path losses.

In one embodiment, the method comprises determining an average frequency-dependent path loss on each different frequency between network access nodes. Accordingly, an average frequency-dependent path loss on each frequency may be determined for a particular region.

In one embodiment, the frequency-dependent path losses at each different frequency are determined using an effective frequency-dependent attenuation between the network access nodes.

In one embodiment, the effective frequency-dependent attenuation is determined using a path loss measured at each different frequency between the network access nodes and a distance between the network access nodes.

In one embodiment, the method comprises determining an average effective frequency-dependent attenuation on each different frequency between the network access nodes.

In one embodiment, the frequency-dependent path losses are determined from predetermined frequency-dependent path losses approximated for different deployment environments. Accordingly, rather than determining the frequency-dependent path losses based on actual transmissions between network nodes, the frequency-dependent path losses may be approximated based on knowledge of the environment in which the network nodes are deployed. For example, a set of approximated frequency-dependent path losses may be derived and then utilised when required. The set may, for example, include frequency-dependent path losses for typical office configurations, one of which may be selected based on knowledge of the physical characteristics of the environment that the network nodes are to be deployed.

In one embodiment, the distance is estimated from a corrected path loss determined by removing the frequency-dependent path losses from the total path losses on each different frequency. Accordingly, the distance may be determined from a standard path loss model which uses a corrected path loss which cancels the frequency-dependent path losses on each frequency.

In one embodiment, the distance is estimated using the total path loss, a transmission power and the average effective frequency-dependent attenuation on each different frequency.

In one embodiment, the distance is estimated in accordance with

$$\left[\frac{F_{i_{f_1}} \cdot d_{i_{UE}}^{r_0} + L_{P_{i_{f_1}}}(lin) \cdot F_{i_{f_1}} \cdot d_{i_{UE}}^{r_0} - L_{P_{i_{f_1}}}(lin)}{L_{P_{i_{f_1}}}(lin) \cdot F_{i_{f_1}} \cdot d_{i_{UE}}^{r_0}}\right]^{\overline{\alpha}_{f_2}} - \left[\frac{F_{i_{f_2}} \cdot d_{i_{UE}}^{r_0} + L_{P_{i_{f_2}}}(lin) \cdot F_{i_{f_2}} \cdot d_{i_{UE}}^{r_0} - L_{P_{i_{f_2}}}(lin)}{L_{P_{i_{f_2}}}(lin) \cdot F_{i_{f_1}} \cdot d_{i_{UE}}^{r_0}}\right]^{\overline{\alpha}_{f_1}} = 0; \quad i = 1, 2, 3$$

In one embodiment, the method comprises estimating a distance between the network node and each of the network access nodes. It will be appreciated that by increasing the number of network nodes to which the distance is estimated, location estimation can be improved.

According to a second aspect, there is provided a network node as claimed in claim 14.

In one embodiment, the frequency-dependent path losses are determined from a difference in the total path losses on each different frequency between the at least one network access node and the network node.

In one embodiment, the frequency-dependent path losses are determined from transmissions on each different frequency between at least two network access nodes.

In one embodiment, the frequency-dependent path losses are determined from transmissions on each different frequency between at least three network access nodes.

In one embodiment, the frequency-dependent path losses are determined from transmissions on each different frequency and a distance between network access nodes.

In one embodiment, the determining logic is operable to determine an average frequency-dependent path loss on each different frequency between network access nodes.

In one embodiment, the frequency-dependent path losses at each different frequency are determined using an effective frequency-dependent attenuation between the network access nodes.

In one embodiment, the effective frequency-dependent attenuation is determined using a path loss measured at each different frequency between the network access nodes and a distance between the network access nodes.

In one embodiment, the determining logic is operable to determine an average effective frequency-dependent attenuation on each different frequency between the network access nodes.

In one embodiment, the frequency-dependent path losses are determined from predetermined frequency-dependent path losses approximated for different deployment environments.

In one embodiment, the distance is estimated from a corrected path loss determined by removing the frequency-dependent path losses from the total path losses on each different frequency.

In one embodiment, the distance is estimated using the total path loss, a transmission power and the average effective frequency-dependent attenuation on each different frequency.

In one embodiment, the distance is estimated in accordance with

$$\left[\frac{F_{i_{f_1}} \cdot d_{iUE}^{r_0} + L_{p_{i_{f_1}}}(lin) \cdot F_{i_{f_1}} \cdot d_{iUE}^{r_0} - L_{p_{i_{f_1}}}(lin)}{L_{p_{i_{f_1}}}(lin) \cdot F_{i_{f_1}} \cdot d_{iUE}^{r_0}}\right]^{\bar{\alpha}_{f_2}} - \left[\frac{F_{i_{f_2}} \cdot d_{iUE}^{r_0} + L_{p_{i_{f_2}}}(lin) \cdot F_{i_{f_2}} \cdot d_{iUE}^{r_0} - L_{p_{i_{f_2}}}(lin)}{L_{p_{i_{f_2}}}(lin) \cdot F_{i_{f_2}} \cdot d_{iUE}^{r_0}}\right]^{\bar{\alpha}_{f_1}} = 0; \ i = 1, 2, 3$$

In one embodiment, the estimating logic is operable to estimate a distance between the network node and each of the network access nodes.

According to a third aspect, there is provided a computer program product operable, when executed on a computer, to perform the method of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

> Figure 1 illustrates a method for estimating the distance between network nodes according to one embodiment;
> Figure 2 illustrates an example deployment of three different base stations or other network nodes operating in an environment where the user equipment is expected to operate; and
> Figure 3 illustrates the base station arrangement of Figure 2, but with the inclusion of user equipment whose location is to be determined.

DESCRIPTION OF THE EMBODIMENTS

Overview

The losses between a network access node such as, for example, a base station and another network node such as, for example, user equipment are estimated. These estimates may be made by an operator based on an assessment of the deployment environment or by measurements made by network nodes. For example, network nodes may perform path-loss measurements $L_{P1}$ and $L_{P2}$ at at least two different frequencies, $f_1$ and $f_2$ (for example, $f_1$ could be set to 900 MHz (the GSM spectrum) and $f_2$ could be set to 1.9 or 2.6 GHz (the LTE spectrum)). To enable the two path-loss measurements to be made, the base station transmits pilot signals in each frequency bands. Since the signal attenuation in free space is frequency independent, but the transmission loss caused by walls or other obstacles is frequency dependent, the path loss for both frequencies caused by the walls $L_{W1}$ and $L_{W2}$ can be calculated based on the difference in the path loss measurements because the attenuation properties through different materials at different frequencies are known or can be derived, as will be explained in more detail below.

Once the wall losses $L_{W1}$ and $L_{W2}$ are known, the distance between the base station and the user equipment can be estimated based on the corrected path loss $L_{PC} = L_{P1} - L_{W1}$. This removes the wall effects, which makes received power-based indoor distance measurements problematic where a measurement database would otherwise be required to identify locations due to the effects of walls. By using the corrected path loss, the distance between the base station and the user equipment can be accurately estimated using the corrected path loss $L_{PC}$ and a path loss equation such as, for example, the free space path loss equation. Using this approach, the location of user equipment can be calculated using known triangulation methods when the distance to at least three base stations is determined.

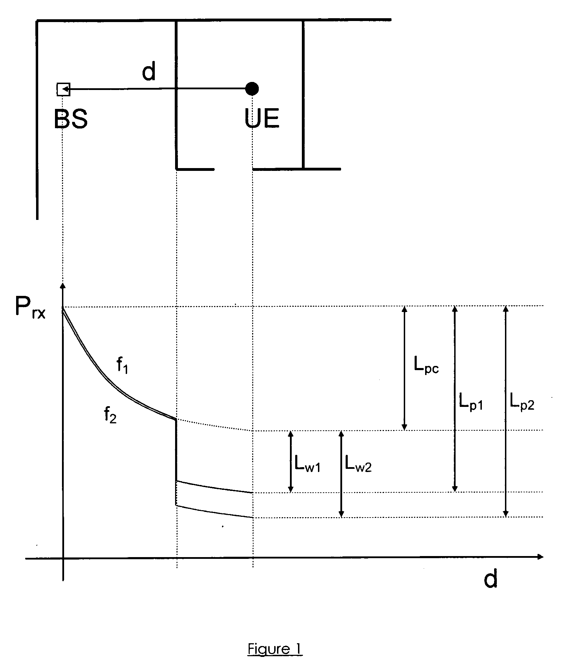

Figure 1 illustrates principles of a method for estimating the distance between network nodes. In this example, the network nodes are a base station and user equipment. The base station transmits two pilots on two different frequencies $f_1$ and $f_2$. The connected user equipment send measurement reports detailing received power measurements of the pilot signals. The measurement reports are used to calculate the path loss for the links between the base station and the user equipment. The path loss can readily be determined by subtracting the received power measurements reported by the user equipment from the known transmission power. In this example, the path loss consists of a free-space path loss over the distance d, as well as an additional wall loss Lw. The free-space path loss is independent of frequency and so is equal for measurements on both frequencies. However, the wall loss is heavily frequency-dependent (lower frequencies are attenuated less than higher frequencies). This difference in attenuation is apparent from the difference in the two path loss measurements $L_{P1}$ and $L_{P2}$, and can be used to estimate the wall losses $L_{W1}$ and $L_{W2}$.

Considering a path loss model given by Equation (1) below:

$$L_p(dB) = PL_0 + 10\gamma \log_{10}(d) \qquad \text{Equation (1)}$$

PLo is a known parameter and it represents the path loss at a reference distance (usually 1 metre), d is the distance between the user equipment and the base station and $\gamma$ is a path loss exponent. The path loss exponent, $\gamma$, consists of two parts; the frequency-independent part (free-space path loss exponent, $\gamma_0 = 2$) and a frequency-dependent part (environment path loss exponent, $\gamma_e$).

The path loss exponent can be expressed as:

$$\gamma = \gamma_0 + \gamma_e \qquad \text{Equation (2)}$$

In light of Equation (2), Equation (1) can now be written (in the log scale) as:

$$L_p(dB) = PL_0 + 10\gamma_0 \log_{10}(d) + 10\gamma_e \log_{10}(d) \qquad \text{Equation (3)}$$

Hence, it can be seen that given the path loss at the reference distance PLo, the free space path loss exponent $\gamma_0$ and the environment path loss exponent $\gamma_e$ (each of which may be pre-programmed or derived from measurements made by deployed network nodes, as will be explained in more detail below), the distance d between network nodes can be derived from the path loss measurement $L_p$.

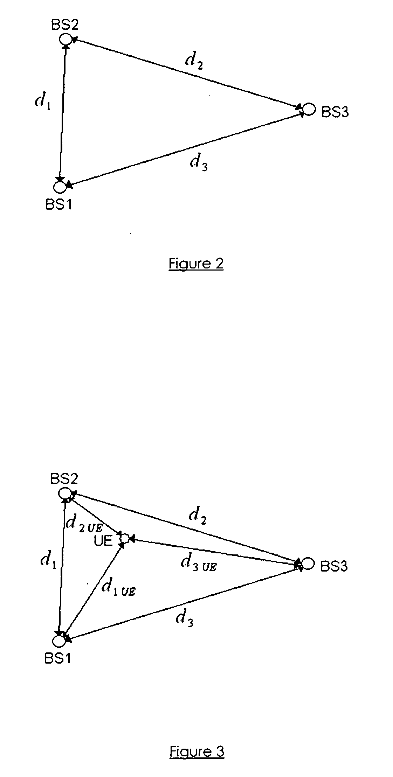

In order to improve accuracy in deriving the estimated distance, the network may perform measurements to estimate the losses due to the walls or other obstructions. For example, loss estimation can be performed automatically using three different base stations or other network nodes operating in the environment where the user equipment is expected to operate, as shown schematically in Figure 2.

Wall loss estimation

The estimation is performed by measuring the path losses between each pair of the three base stations at at least two different frequencies, $f_1$ and $f_2$, as will now be explained in more detail.

Using knowledge of the distance between base stations (i.e., $d_1$, $d_2$ and $d_3$), Equation (3) enables the evaluation of $\gamma_e$. For a signal at frequency $f_1$:

$$\gamma_{ei_{f_1}} = \frac{L_{pi_{f_1}}(dB) - PL_{0i_{f_1}} - 10\gamma_0 \log_{10}(d_i)}{10 \log_{10}(d_i)}; i = 1,2,3 \qquad \text{Equation (4)}$$

where: $L_{pif1}$ (dB) is the path loss between any two base stations at frequency $f_1$ and $d_i$ is the distance between base stations.

As the example in Figure 2 uses three different base stations, $\gamma_e$, is calculated using Equation (4) for each pair of the three base stations at frequency $f_1$, resulting in three values for $\gamma_{eif1}$. A similar evaluation is performed for $\gamma_{eif2}$.

Equation (3) can be written on the linear scale as:

$$L_p(lin) = \frac{P_t}{P_r} = F \cdot d^{\gamma_0 + \gamma_e} = F \cdot d^{\gamma_0} \cdot d^{\gamma_e} \text{, where } F = 10^{\frac{PL_0}{10}} \qquad \text{Equation (5)}$$

$P_t$ and $P_r$ stand for the transmitted and received powers, respectively.

From Equation (5) it can be seen that the loss solely due to free space is given by $F \cdot d^{\gamma_0}$, while the effect of the environment is given by the factor, $d^{\gamma_e}$. The loss entirely induced by the environment (excluding free space) is given by:

$$\Delta L_p(lin) = \frac{P_t}{F d^{\gamma_0}} - \frac{P_t}{F d^{\gamma_0} d^{\gamma_e}} = \frac{P_t(d^{\gamma_e} - 1)}{F d^{\gamma_0} d^{\gamma_e}} \qquad \text{Equation (6)}$$

This loss can be assumed to originate from the absorption losses of "effective" walls with an "effective" thickness, d, equal to the distance between respective base stations. The power loss of the signal propagating through such an effective wall at the frequency $f_1$ is given by:

$$L_{wi_{f_1}} = P_{t_{f_1}} - P_{t_{f_1}} e^{-2\alpha_{i_{f_1}} d_i} ; \; i = 1, 2, 3 \qquad \text{Equation (7)}$$

where $P_{tf1}$ is the power transmitted by the base station at the frequency $f_1$, $\alpha_{iF1}$ is the "effective" attenuation constant of the "effective" wall with a thickness $d_i$ (the distance between each pair of base stations) at the frequency $f_1$.

By equating Equation (7) with the loss entirely induced by the environment given by Equation (6) (and recognizing that $P_{tf_1}$ and $d_i$ of (7) correspond to $P_t$ and $d$ of (6)) one obtains the "effective" attenuation constant of the "effective" wall as a function of the path loss exponent, $\gamma_{eif_1}$, at a frequency of $f_1$:

$$\alpha_{i_{f_1}} = -\frac{1}{2d_i} \cdot \ln\left[\frac{F_{i_{f_1}} d_i^{\gamma_0} d_i^{\gamma_{ei_{f_1}}} + 1 - d_i^{\gamma_{ei_{f_1}}}}{F_{i_{f_1}} d_i^{\gamma_0} d_i^{\gamma_{ei_{f_1}}}}\right]; \; i = 1, 2, 3 \quad \text{Equation (8)}$$

By recognising that Equation (8) is evaluated three times (once for each pair of the three different base stations) at a specific frequency, the effective attenuation constant may be averaged to:

$$\overline{\alpha}_{f_1} = \frac{1}{3}\left(\alpha_{1_{f_1}} + \alpha_{2_{f_1}} + \alpha_{3_{f_1}}\right) \qquad \text{Equation (9)}$$

Here, $\overline{\alpha}_{f1}$ represents the average effective wall attenuation for the environment shown in Figure 2 at the frequency $f_1$. A similar expression can be written for the average effective wall attenuation at the frequency $f_2$. Now that an average effective wall attenuation $\overline{\alpha}_{f1}$ and $\overline{\alpha}_{f2}$ at two different frequencies has been calculated, the calibration has been completed. In particular, as will be explained in more detail below, average effective wall attenuations at the two different frequencies which represent derived frequency-dependent path losses may be utilised to determine the distance of a network node, such as user equipment, from any base station by using measured path losses of transmissions received from that network node on at least two different frequencies.

Location Estimation

Figure 3 shows the base station arrangement of Figure 2, but with the inclusion of user equipment whose location is to be determined. The path loss shown in Equation (5) at the two frequencies $f_1$ and $f_2$ can be written as:

$$L_{P_{i_{f_1}}}(lin) = \frac{P_{t_{f_1}}}{P_{r_{f_1}}} = \frac{P_{t_{f_1}}}{P_{r_{i_{f_1}(free\,space)}} - L_{wi_{f_1}}} = \frac{P_{t_{f_1}}}{\frac{P_{t_{f_1}}}{F_{i_{f_1}} \cdot d_{iUE}^{r_0}} - P_{t_{f_1}}(1 - e^{-2\overline{\alpha}_{f_1}k_i})} = \frac{F_{i_{f_1}} \cdot d_{iUE}^{r_0}}{1 - F_{i_{f_1}} \cdot d_{iUE}^{r_0} + F_{i_{f_1}} \cdot d_{iUE}^{r_0} \cdot e^{-2\overline{\alpha}_{f_1}k_i}}$$

$$L_{P_{i_{f_2}}}(lin) = \frac{P_{t_{f_2}}}{P_{r_{f_2}}} = \frac{P_{t_{f_2}}}{P_{r_{i_{f_2}(free\,space)}} - L_{wi_{f_2}}} = \frac{P_{t_{f_2}}}{\frac{P_{t_{f_2}}}{F_{i_{f_2}} \cdot d_{iUE}^{r_0}} - P_{t_{f_2}}(1 - e^{-2\overline{\alpha}_{f_2}k_i})} = \frac{F_{i_{f_2}} \cdot d_{iUE}^{r_0}}{1 - F_{i_{f_2}} \cdot d_{iUE}^{r_0} + F_{i_{f_2}} \cdot d_{iUE}^{r_0} \cdot e^{-2\overline{\alpha}_{f_2}k_i}}; i = 1, 2, 3$$

Equation (10)

In Equation (10), the terms $P_{t_{f_1}}(1 - e^{-2\overline{\alpha}_{f_1}k_i})$ and $P_{t_{f_2}}(1 - e^{-2\overline{\alpha}_{f_2}k_i})$ represent the powers absorbed by the walls and are obtained from Equation (7) by replacing the distance $d_i$ with a parameter $k_i$ .. This parameter $k_i$ represents the unknown "thickness" of an obstructed wall with attenuation constants $\overline{\alpha}_{f1}$ and $\overline{\alpha}_{f2}$ at frequencies $f_1$ and $f_2$ respectively. $d_{iUE}$ represents the distances from the user equipment to the i-th base station. The introduction of parameter $k_i$ as an unknown thickness of a fictitious wall is justified as long as the rate of change of the average attenuation constant with frequency does not vary significantly from the rate of change of the attenuation constant for a particular pair of base stations with frequency, i.e.:

$$\frac{\alpha_{i+1_{f_1}} - \alpha_{i_{f_1}}}{f_2 - f_1} \approx \frac{\overline{\alpha}_{f_1} - \overline{\alpha}_{f_2}}{f_2 - f_1}; i = 1, 2, 3 \qquad \text{(Equation 11)}$$

By eliminating $k_i$ from the system of equation given by Equation (10), one obtains the expression from which the distances $d_{iUE}$ are found:

$$\left[\frac{F_{i_{f_1}} \cdot d_{iUE}^{r_0} + L_{P_{i_{f_1}}}(lin) \cdot F_{i_{f_1}} \cdot d_{iUE}^{r_0} - L_{P_{i_{f_1}}}(lin)}{L_{P_{i_{f_1}}}(lin) \cdot F_{i_{f_1}} \cdot d_{iUE}^{r_0}}\right]^{\overline{\alpha}_{f_2}} - \left[\frac{F_{i_{f_2}} \cdot d_{iUE}^{r_0} + L_{P_{i_{f_2}}}(lin) \cdot F_{i_{f_2}} \cdot d_{iUE}^{r_0} - L_{P_{i_{f_2}}}(lin)}{L_{P_{i_{f_2}}}(lin) \cdot F_{i_{f_2}} \cdot d_{iUE}^{r_0}}\right]^{\overline{\alpha}_{f_1}} = 0; i = 1, 2, 3$$

(Equation 12)

Which ultimately leads to the estimated distances $d_{iUE}$ from the three base stations as depicted in Figure 3.

Example Operation

Assume that it is required to determine the radial distance $d_{1UE}$ between the user equipment and the base station BS1 of Figure 3. The distance between base stations are $d_1$ = 100 metres, $d_2$ = 75 metres and $d_3$ = 150 metres. Isotropic antennas are used at both the transmit and receive ends.

The path losses at the reference distance $PL_{0f1}$ and $PL_{0f2}$ need to be determined. These may be determined at a distance of 1 metre from each base station and are dependent on the parameters of the antennas used in the user equipment and base station. They can be either measured or, provided that the parameters of the antennas are known, calculated. The general expression for this term is known as Friis free-space link equation and is given by:

$$PL_0(dB) = 10\log_{10}\left(\frac{16\pi^2}{G_t G_r \lambda^2}\right) \qquad \text{(Equation 13)}$$

which for the case of isotropic antennas ($G_r = G_t = 1$) for transmit and receive which simplifies to:

$$PL_0(dB) = 20\log_{10}\left(\frac{4\pi}{\lambda}\right) \qquad \text{(Equation 14)}$$

At the frequencies $f_1$ of 900 MHz and $f_2$ of 1900 MHz, the path loss at the reference distance $PL_{0if1}$ (dB) is 31.526 dB and $PL_{0F2}$ is 38.01 dB.

From Equation (4), the path loss exponents $\gamma_{ef1}$ and $\gamma_{ef2}$ can be calculated from the measured path loss over the distance $d_1$, $d_2$ and $d_3$ using the path losses at the reference distance PLo mentioned above and the distance between base stations. This leads to the values of $\gamma_{ef1}$ = 2.4 and $\gamma_{ef2}$ = 2.6. Alternatively, these values may be estimated based on the characteristics of the environment such as the number of walls, the wall types and their density.

Now that the values of the path loss exponents are known, the values of the attenuation constants are calculated from Equation (8) for each pair of the three base stations at each frequency. In this example, $\overline{\alpha}_{f1}$ = 3.5734x10$^{-10}$ and $\overline{\alpha}_{f2}$ = 8.9899x10$^{-11}$.

Now the distance $d_{1UE}$ from the user equipment to base station BS1 may be estimated. The measured path losses between base station BS1 and the user equipment are 55.5 dB and 64 dB at $f_1$ and $f_2$ respectively. Using Equation (12), $d_{1UE}$ is calculated as:

$$d = 7.6\,m \qquad \text{Equation (15)}$$

From Equation (7), the losses due to the walls may be calculated as:

$$L_{w,f1} = 6.2577\,dB \quad \text{and} \quad L_{w,f2} = 8.3737\,dB \qquad \text{Equation (16)}$$

As an additional verification, it can be seen that the distance estimate is robust for different wall losses between the base station and the user equipment. To demonstrate this, assume that the attenuation due to the walls between the user equipment and base station BS1 is two times greater than the values given in Equation (15) (i.e., $L_{W,f1}$ = 12.5154 dB and $L_{W,f2}$ = 16.7474 dB). As a result, the measured path losses are now 61.6577 dB and 72.3737 dB at $f_1$ and $f_2$ respectively. The measured attenuation between base stations remains the same so that the attenuation constants $\overline{\alpha}_{f1}$ = 3.5734x10$^{-10}$ and $\overline{\alpha}_{f2}$ = 8.9899x10$^{-11}$.

The recalculated distance is now:

$$d = 7.6\,m \qquad \text{Equation (17)}$$

The calculated distances given by Equations (15) and (17) are the same, which shows that it is possible to accurately estimate the distance independently of the wall losses.

Through approaches mentioned above, it can be seen that it is possible to accurately determine the location of user equipment with respect to base stations. Using triangulation techniques where the distance to at least three network nodes of know locations is performed, highly accurate location estimation of user equipment or other network nodes is possible. With such accurate location estimation it is possible to provide many location-based applications and services to users, such as:

1. A guided tour on a smart-phone in a public building - e.g. Museum or Art Gallery. The smart phone application uses location information provided by the femto based service to customise information (audio/visual) presented to the user.

2. A shopper in a supermarket may be awarded a discount coupon on an item. Provided with accurate location information by the femto based service, an application on a smart phone could direct/guide the person to the location of the item.

3. Finding the location of a colleague in an enterprise environment - e.g. which meeting room are they in. Provided with accurate location information from the femto base service, a smart phone application could display the colleague's location.

4. Meeting attendees - useful for automatically generating a list of who attended a meeting. A meeting organiser requests list of people in meeting room at a particular time. By continually recording the location of phones, the femto based service can list who was at the location at a particular time.

5. Social/professional networking. Provided with location/presence information by a femto based service, an application could automatically request a link to the profile of people present at an event (conference, pub, house party etc.).

The above examples are just a few of a large number of possibilities of location and presence-based services. One requirement that all of these services have in common is that they require accurate location estimation of mobile phones. Current existing methods are either do not provide sufficient accuracy or are too expensive to deploy.

The technique mentioned above provides for accurate location estimation which allows measuring and compensating for wall losses between the base stations and the user equipment and thereby enables received power based location estimation without the need for expensive calibration for each building.

Enhancements

In network nodes, the quality of the different receivers/antennas for different frequencies may be different, resulting in different losses. This can lead to errors in the path-loss estimation. This problem can be prevented by auto-calibrating the calculation. This can be done by performing measurements for a known location of the network node (e.g. when entering the building) where there are no walls. In this case the path-loss estimate should be equivalent for the two frequencies. Any difference can be stored for the particular mobile and taken into account in the calculations above to correct for the measurement error.

The same approach can be used when the wall losses at a specific location are known for the two frequencies. This correction value is required at all points where the distance to the network node is estimated. Therefore the base station that performs the calibration needs to transmit the correction value to all distance measurement points (e.g. other base stations, or a central entity that collects all measurements for the location estimation).

This approach provides a cost effective and accurate method to estimate the distance of a mobile to a base station in indoor environments. This enables many location and presence based services and overcomes or alleviates problems existing solutions have due to lack of accuracy indoors or due to expense for accurate indoor positioning.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of estimating a distance between a network access node (BS) and a network node of a wireless communications network, comprising:

measuring total path losses between said network access node and said network node on at least two different frequencies;

determining frequency-dependent path losses of transmissions by said network access node on said at least two different frequencies; and

estimating a distance between said network node and said network access node using said total path losses and said frequency-dependent path losses on said at least two different frequencies.

2. The method of claim 1, wherein said frequency-dependent path losses are determined from a difference in said total path losses on each different frequency between said network access node and said network node.

3. The method of claim 1 or 2, wherein said frequency-dependent path losses are determined from transmissions on each different frequency between at least two network access nodes.

4. The method of any preceding claim, wherein said frequency-dependent path losses are determined from transmissions on each different frequency between at least three network access nodes.

5. The method of claims 3 or 4, wherein said frequency-dependent path losses are determined from transmissions on each different frequency and a distance between network access nodes.

6. The method of any one of claims 3 to 5, comprising determining an average frequency-dependent path loss on each different frequency between network access nodes.

7. The method of any one of claims 3 to 6, wherein said frequency-dependent path losses at each different frequency are determined using an effective frequency-dependent attenuation between said network access nodes.

8. The method of claim 7, wherein said effective frequency-dependent attenuation is determined using a path loss measured at each different frequency between said network access nodes and a distance between said network access nodes.

9. The method of any one of claims 3 to 8, comprising determining an average effective frequency-dependent attenuation on each different frequency between said network access nodes.

10. The method of any preceding claim, wherein said frequency-dependent path losses are determined from predetermined frequency-dependent path losses approximated for different deployment environments.

11. The method of any preceding claim, wherein said distance is estimated from a corrected path loss determined by removing said frequency-dependent path losses from said total path losses on each different frequency.

12. The method of any one of claims 9 to 11, wherein said distance is estimated using said total path loss, a transmission power and said average effective frequency-dependent attenuation on each different frequency.

13. The method of any one of claims 3 to 12, comprising estimating a distance between said network node and each of said network access nodes.

14. A network node operable to estimating a distance between a network access node (BS) and a network node (UE) of a wireless communications network, comprising:

measurement logic operable to measure total path losses between the network access node and the network node on at least two different frequencies;

determining logic operable to determine frequency-dependent path losses of transmissions by the network access node on the at least two different frequencies; and

estimating logic operable to estimate a distance between the network node and the network access node using the total path losses and the frequency-dependent path losses on the at least two different frequencies.

15. A computer program product operable, when executed on a computer, to perform the method steps of any one of claims 1 to 13.

**Patentansprüche**

1. Verfahren zum Schätzen eines Abstands zwischen einem Netzwerkzugangsknoten (BS) und einem Netzwerkknoten eines drahtlosen Kommunikationsnetzwerks, umfassend:

   Messen von Gesamtpfadverlusten zwischen besagtem Netzwerkzugangsknoten und besagtem Netzwerkknoten auf mindestens zwei unterschiedlichen Frequenzen;
   Bestimmen von frequenzabhängigen Pfadverlusten von Übertragungen durch besagten Netzwerkzugangsknoten auf besagten mindestens zwei unterschiedlichen Frequenzen; und
   Schätzen eines Abstands zwischen besagtem Netzwerkknoten und besagtem Netzwerkzugangsknoten durch Heranziehen der besagten Gesamtpfadverluste und der besagten frequenzabhängigen Pfadverluste auf besagten mindestens zwei unterschiedlichen Frequenzen.

2. Verfahren nach Anspruch 1, wobei besagte frequenzabhängige Pfadverluste bestimmt werden aus einer Differenz bei besagten Gesamtpfadverlusten auf jeder unterschiedlichen Frequenz zwischen besagtem Netzwerkzugangsknoten und besagtem Netzwerkknoten.

3. Verfahren nach Anspruch 1 oder 2, wobei besagte frequenzabhängige Pfadverluste bestimmt werden aus Übertragungen auf jeder unterschiedlichen Frequenz zwischen mindestens zwei Netzwerkzugangsknoten.

4. Verfahren nach einem beliebigen der vorstehenden Ansprüche, wobei besagte frequenzabhängige Pfadverluste bestimmt werden aus Übertragungen auf jeder unterschiedlichen Frequenz zwischen mindestens drei Netzwerkzugangsknoten.

5. Verfahren nach Anspruch 3 oder 4, wobei besagte frequenzabhängige Pfadverluste bestimmt werden aus Übertragungen auf jeder unterschiedlichen Frequenz und einem Abstand zwischen Netzwerkzugangsknoten.

6. Verfahren nach einem beliebigen der Ansprüche 3 bis 5, umfassend das Bestimmen eines durchschnittlichen frequenzabhängigen Pfadverlusts auf jeder unterschiedlichen Frequenz zwischen Netzwerkzugangsknoten.

7. Verfahren nach einem beliebigen der Ansprüche 3 bis 6, wobei besagte frequenzabhängige Pfadverluste auf jeder unterschiedlichen Frequenz bestimmt werden durch Heranziehen einer effektiven frequenzabhängigen Dämpfung zwischen besagten Netzwerkzugangsknoten.

8. Verfahren nach Anspruch 7, wobei besagte effektive frequenzabhängige Dämpfung bestimmt wird durch Heranziehen eines Pfadverlusts, der an jeder unterschiedlichen Frequenz zwischen besagten Netzwerkzugangsknoten gemessen wird, und eines Abstands zwischen besagten Netzwerkzugangsknoten.

9. Verfahren nach einem beliebigen der Ansprüche 3 bis 8, umfassend das Bestimmen einer durchschnittlichen effektiven frequenzabhängigen Dämpfung auf jeder unterschiedlichen Frequenz zwischen besagten Netzwerkzugangsknoten.

10. Verfahren nach einem beliebigen der vorstehenden Ansprüche, wobei besagte frequenzabhängige Pfadverluste aus vorausbestimmten frequenzabhängigen Pfadverlusten bestimmt werden, die für unterschiedliche Einsatzumgebungen angeglichen werden.

11. Verfahren nach einem beliebigen der vorstehenden Ansprüche, wobei besagter Abstand aus einem korrigierten Pfadverlust geschätzt wird, der bestimmt wird durch Wegnehmen der besagten frequenzabhängigen Pfadverluste von besagten Gesamtpfadverlusten auf jeder unterschiedlichen Frequenz.

12. Verfahren nach einem beliebigen der Ansprüche 9 bis 11, wobei besagter Abstand geschätzt wird durch Heranziehen des besagten Gesamtpfadverlusts, einer Übertragungsleistung und der besagten durchschnittlichen effektiven frequenzabhängigen Dämpfung auf jeder unterschiedlichen Frequenz.

13. Verfahren nach einem beliebigen der Ansprüche 3 bis 12, umfassend das Schätzen eines Abstands zwischen besagtem Netzwerkknoten und jedem der besagten Netzwerkzugangsknoten.

14. Netzwerkknoten, betreibbar zum Schätzen eines Abstands zwischen einem Netzwerkzugangsknoten (BS) und einem Netzwerkknoten (UE) eines drahtlosen Kommunikationsnetzwerks, umfassend:

Messlogik, betreibbar zum Messen von Gesamtpfadverlusten zwischen dem Netzwerkzugangsknoten und dem Netzwerkknoten auf mindestens zwei unterschiedlichen Frequenzen;
Bestimmungslogik, betreibbar zum Bestimmen von frequenzabhängigen Pfadverlusten von Übertragungen durch den Netzwerkzugangsknoten auf den mindestens zwei unterschiedlichen Frequenzen; und
Schätzlogik, betreibbar zum Schätzen eines Abstands zwischen dem Netzwerkknoten und dem Netzwerkzugangsknoten durch Heranziehen der Gesamtpfadverluste und der frequenzabhängigen Pfadverluste auf den mindestens zwei unterschiedlichen Frequenzen.

15. Computerprogrammprodukt, das, wenn es auf einem Computer ausgeführt wird, betreibbar ist, um die Verfahrensschritte nach einem beliebigen der Ansprüche 1 bis 13 durchzuführen.

**Revendications**

1. Procédé d'estimation d'une distance entre un noeud d'accès au réseau (BS) et un noeud de réseau d'un réseau de communications sans fil, comprenant les étapes suivantes :

mesurer des affaiblissements totaux sur le trajet entre ledit noeud d'accès au réseau et ledit noeud de réseau à au moins deux fréquences différentes ;
déterminer les affaiblissements sur le trajet dépendants de la fréquence des transmissions par ledit noeud d'accès au réseau auxdites au moins deux fréquences différentes ; et
estimer une distance entre ledit noeud de réseau et ledit noeud d'accès au réseau en utilisant lesdits affaiblissements totaux sur le trajet et lesdits affaiblissements sur le trajet dépendants de la fréquence auxdites au moins deux fréquences différentes.

2. Procédé selon la revendication 1, selon lequel lesdits affaiblissements sur le trajet dépendants de la fréquence sont déterminés à partir d'une différence dans lesdits affaiblissements totaux sur le trajet à chaque fréquence différente entre ledit noeud d'accès au réseau et ledit noeud de réseau.

3. Procédé selon la revendication 1 ou 2, selon lequel lesdits affaiblissements sur le trajet dépendants de la fréquence sont déterminés à partir des transmissions à chaque fréquence différente entre au moins deux noeuds d'accès au réseau.

4. Procédé selon l'une quelconque des revendications précédentes, selon lequel lesdits affaiblissements sur le trajet dépendants de la fréquence sont déterminés à partir des transmissions à chaque fréquence différente entre au moins trois noeuds d'accès au réseau.

5. Procédé selon les revendications 3 ou 4, selon lequel lesdits affaiblissements sur le trajet dépendants de la fréquence sont déterminés à partir des transmissions à chaque fréquence différente et d'une distance entre les noeuds d'accès au réseau.

6. Procédé selon l'une quelconque des revendications 3 à 5, comprenant la détermination d'un affaiblissement sur le trajet dépendant de la fréquence moyen à chaque fréquence différente entre les noeuds d'accès au réseau.

7. Procédé selon l'une quelconque des revendications 3 à 6, selon lequel lesdits affaiblissements sur le trajet dépendants de la fréquence à chaque fréquence différente sont déterminés en utilisant une atténuation dépendante de la fréquence effective entre lesdits noeuds d'accès au réseau.

8. Procédé selon la revendication 7, selon lequel ladite atténuation dépendante de la fréquence effective est déterminée en utilisant un affaiblissement sur le trajet mesuré à chaque fréquence différente entre lesdits noeuds d'accès au réseau et une distance entre lesdits noeuds d'accès au réseau.

9. Procédé selon l'une quelconque des revendications 3 à 8, comprenant la détermination d'une atténuation dépendante de la fréquence effective moyenne à chaque fréquence différente entre lesdits noeuds d'accès au réseau.

10. Procédé selon l'une quelconque des revendications précédentes, selon lequel lesdits affaiblissements sur le trajet dépendants de la fréquence sont déterminés à partir d'affaiblissements sur le trajet dépendants de la fréquence prédéterminés approximativement pour des environnements de déploiement différents.

11. Procédé selon l'une quelconque des revendications précédentes, selon lequel ladite distance est estimée à partir d'un affaiblissement sur le trajet corrigé déterminé en éliminant lesdits affaiblissements sur le trajet dépendants de la fréquence desdits affaiblissements totaux sur le trajet à chaque fréquence différente.

12. Procédé selon l'une quelconque des revendications 9 à 11, selon lequel ladite distance est estimée en utilisant ledit affaiblissement total sur le trajet, une puissance de transmission et ladite atténuation dépendante de la fréquence effective moyenne à chaque fréquence différente.

13. Procédé selon l'une quelconque des revendications 3 à 12, comprenant l'estimation d'une distance entre ledit noeud de réseau et chacun desdits noeuds d'accès au réseau.

14. Noeud de réseau pouvant être utilisé pour estimer une distance entre un noeud d'accès au réseau (BS) et un noeud de réseau (UE) d'un réseau de communications sans fil, comprenant :

une logique de mesure pouvant être utilisée pour mesurer des affaiblissements totaux sur le trajet entre ledit noeud d'accès au réseau et ledit noeud de réseau à au moins deux fréquences différentes ;
une logique de détermination pouvant être utilisée pour déterminer les affaiblissements sur le trajet dépendants de la fréquence des transmissions par ledit noeud d'accès au réseau auxdites au moins deux fréquences différentes ; et
une logique d'estimation pouvant être utilisée pour estimer une distance entre le noeud de réseau et le noeud d'accès au réseau en utilisant les affaiblissements totaux sur le trajet et les affaiblissements sur le trajet dépendants de la fréquence aux au moins deux fréquences différentes.

15. Produit de programme informatique pouvant être utilisé, lorsqu'il est exécuté sur un ordinateur, pour réaliser les étapes du procédé selon l'une quelconque des revendications 1 à 13.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009047973 A1

- US 6990428 B1